# EUROPEAN PATENT SPECIFICATION

(11) **EP 1 226 381 B1**
(45) Date of publication and mention of the grant of the patent: **14.01.2009**
(21) Application number: 00962262.2
(22) Date of filing: 29.09.2000
(51) Int. Cl.: F16L 11/08, B32B 15/08, C08J 3/28

(54) **METHOD OF PRODUCING A HOSE PIPE FORMED OF A NUMBER OF LAYERS, INCLUDING A BARRIER LAYER OF METAL, AND ITS USE**
VERFAHREN ZUR HERSTELLUNG EINES MEHRSCHICHTIGEN SCHLAUCHES MIT EINER BARRIERESCHICHT AUS METALL UND SEINE ANWENDUNG
PROCEDE DE PRODUCTION DE CONDUIT FLEXIBLE FORME DE PLUSIEURS COUCHES, COMPRENANT UNE COUCHE METALLIQUE BARRIERE, ET UTILISATION ASSOCIEE

(30) Priority: 30.09.1999 DK 139899; 06.03.2000 DK 200000357
(43) Date of publication of application: 31.07.2002
(73) Proprietor: Codan Gummi A/S, 4600 Koge (DK)
(72) Inventor: SJOSTROM, Tom, Codan Gummi A/S, DK-4600 Koge (DK)
(74) Representative: Larsen, Hans Ole
(86) International application number: PCT/DK2000/000539
(87) International publication number: WO 2001/023794

(56) References cited:
- EP-A2- 0 870 595
- US-A- 4 999 903
- US-A- 5 052 444
- US-A- 5 360 037
- US-A- 5 780 132

## Description

### Background of the invention

The invention concerns a method of producing a hose pipe which is built up in a number of layers including a barrier layer of metal, said layers comprising an innermost layer in the form of an under-hose on which the metal layer, a layer of plastic, an armouring layer and a covering layer of rubber are applied in the formation of the hose pipe.

Hose pipes of this kind are used for the transport of fluid or gaseous media of various kinds.

Depending on the demands, which are placed on the hose, it can be provided with a barrier layer for the limitation or prevention of diffusion of the medium in the hose to the surroundings. This barrier can be of various configurations and be of different materials, preferably metal.

In addition to this there are the demands concerning strength and flexibility to ensure that the hose does not rupture, e.g. under high pressure, external influences etc., and it can also be necessary for the hose to be able to tolerate bending, vibrations, i.e. that it can yield without any reduction in the remaining characteristics of the hose.

Where demands are made on the barrier characteristics of the hose, and herewith the metal layer, there is known a hose that is produced by the method as described in US patent no. 4,999,903.

The metal layer consists of a relatively soft material such as aluminium, which is folded around an inner hose in its lengthways direction, so that the side edges of the metal layer are joined in the longitudinal direction of the hose.

Hereafter, the joints are welded together to achieve a diffusion-proof barrier.

In order to achieve a tight connection between the inner hose and the metal tube, a calibration of the metal tube is then carried out so that its diameter is reduced for tight abutment and contact with the inner hose.

Hereafter, an armouring layer and an outer covering are applied.

However, this method is difficult to execute, since it is desirable that the calibration takes place without any noteworthy alteration in length, which could otherwise cause damage to the inner hose. Furthermore, this known hose will be relatively inflexible.

The problem with hoses produced in this way is that the adhesion between the metal layer and the plastic layers is based on a clamping-fast by calibration, which results in an uncertain binding and herewith a non-uniform distribution of the influences which affect the metal layer via the inner hose.

The result of this non-uniform distribution of the forces due to the non-uniform binding between the layers is that the forces can not be distributed and herewith absorbed by the layers, but must be absorbed primarily by the layer of metal.

This means that such a hose cannot be used for media under high pressure, the reason being that there will be a risk of damage to the metal layer, for example by metal fatigue etc.

Another hose is disclosed in US5360037 by Lindström. The hose by Lindström comprises an innermost hose layer, a metal, a plastic layer, an armoring layer and a cover layer of rubber. However, these individual layers has not undergone an optimal optimization in the fabrication process. The hose by Lindström is therefore not very efficient or long lasting.

### The object of the invention

It is the object of the invention to overcome the disadvantages with the prior art, and according to the invention this is achieved in that the surface of the under hose is modified by means of a plasma/corona treatment, after which a layer of polymer which can be vulcanised is applied, after which the layer of metal is applied, said metal layer then being provided with a layer of polymer which can be vulcanised, after which the layers are heated for vulcanising, followed by the application of the remaining layers.

In a surprisingly simple manner, the possibility is hereby achieved of applying the metal layer in such a way that it is secured directly on the under hose, and moreover that the subsequent plastic layer is in both cases secured directly on the metal layer by means of a vulcanising.

The complicated calibration process can thus be completely omitted, and a hitherto-unknown good binding together between the metal layer and the plastic layers is achieved, and herewith an effective distribution of the forces which would otherwise constitute a risk of damage to the metal layer.

Furthermore, it will be possible to use several different types of metals, and herewith to produce hoses with very specific barrier characteristics and with various degrees of resilience, flexibility etc.

As disclosed in claim 2, by using a chemical agent to ensure the binding together, the layers can be vulcanised to the metal layer in a simple manner.

As disclosed in claim 3, by providing the metal layer with corrugations, either closely together or with mutual distance between them, the hose will easily be able to adapt to diverse degrees of bending and herewith influences without deformation or weakening.

Finally, as disclosed in claim 4, it is expedient to use the hose for the transport of difficult media where the demands concerning non-diffusion to the surroundings must be fulfilled, or where the transport must be effected under full protection of the medium.

### The drawing

In the following, an example embodiment of the invention will be described in more detail with reference to the drawing, where
- fig. 1: shows a partly sectional view of a hose pipe, and
- fig. 2: shows a cross-section of the example embodiment according to the invention.

### Description of the example embodiment

In the following, an example of an embodiment of a flexible hose pipe produced by the method according to the invention will be described in more detail.

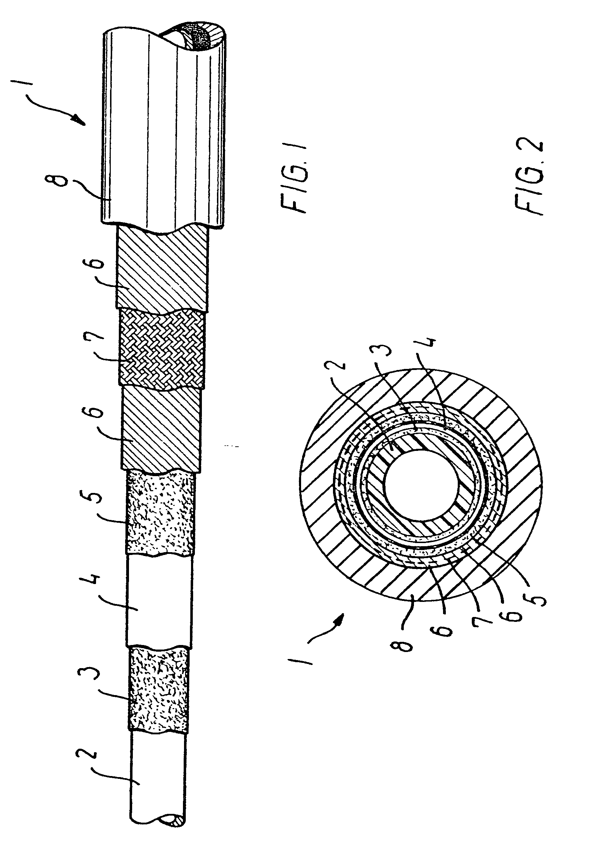

The starting point for the production of the hose 1 is an under hose 2 which is shown to the left in fig. 1 and innermost in fig. 2. The object of the under hose 2 is to ensure the constancy of the medium transported in the hose 1 and to provide the metal barrier layer with protection against influences from the medium.

Where materials and dimensions are concerned, the under hose 2 is selected so that it can withstand the chemical influences to which it may be exposed by the media transported in the hose 1. The material dimension can, for example, be a layer thickness of from 0.1 mm to 3.0 mm.

The material will typically consist of suitable plastic such as PTFE, ETFE, PFA, FEP, PET, or an elastomer such as FKM, QM, FQM, HNBR, EAM, EACM, IIR, EPDM.

Where the hose 2 is made of fluorine-plastic such as ETFE, the surface will comprise fluorine-atoms, which will counteract a binding with the succeeding layer.

In order to achieve the necessary binding, the surface must be pre-treated chemically so that the surface is modified by the fluorine-atoms in the plastic surface being replaced by radicals. This is effected by surface processing in the form of a plasma/corona treatment.

In this way, a chemical agent/structure will be fixed on the radicals which make binding with the succeeding layer possible. This succeeding layer can, for example, consist of the application of a dissolved silane connection, which can be based on aminopropyltriethoxysilane.

Only by being heated this chemical agent/structure can be activated, utilizing a vulcanisation of the layers, when use is made of a vulcanisable polymer as binding agent between the hose 2 and the metal layer 4. As vulcanisable polymer, use can be made of a mixture, for example based on FKM (fluorine-containing polymer, where the fluorine content can lie between 50-72%).

To ensure a binding to the metal layer, here it is also necessary to apply a chemical agent to the metal layer 4, which ensures the binding to the vulcanisable polymer.

The binding between the metal layer 4 and the succeeding layer 6 is ensured by using an elastomer containing a chemical binding promoter, which e.g. can consist of a zinc salt of methacrylic acid.

Hereafter, the metal layer 4 is treated externally so that the vulcanisable polymer can bind hereto, which can be effected by applying a dissolved silane connection such as aminopropyltriethoxysilane. There is then applied a layer of vulcanisable polymer 5 containing zinc dimethacrylate or the like, which ensures a covalent binding to the metal layer 4. The polymer 6 can be based e.g. on EACM, ACM or similar polymers.

The object of the metal foil 4 is to constitute an effective barrier against diffusion of the medium to the surroundings, and in this way to seal the medium in the hose.

This metal barrier 4 can be of stainless steel, aluminium, copper or alloys, and the thickness of the material will typically be between 30 and 300 my.

Depending on the area of application of the hose 1, the metal layer can be selected to be of smooth or corrugated configuration. Folding and possibly welding of the metal layer or by plasma application of the metal layer can preferably achieve these configurations.

Where the metal layer 4 is formed by the wrapping around of a web of foil, this can be wound in a spiral either with or without overlap. With overlap, the foil in itself will be able to form tightness by cohesion of the overlapping part of the web in connection with the vulcanising.
In the plastic layer 6 there is laid or moulded an armouring layer 7 to ensure that the hose is able to withstand various tractive/pressure influences and to be able to resist high medium pressures.

Pressures of up to 1,200 bar will be able to arise.

The armouring layer can comprise "textile" based on PET, PA, PVA or aramid. Use can also be made of metal mesh/wire based on brass-coated steel or stainless steel.

Finally, the hose is protected by an outermost cover layer 8 of suitable material which can correspond to that mentioned for the under hose 2. The object of the cover layer 8 is to protect the hose against physical as well as chemical external influences. The thickness of the cover layer 8 can be between 0.8 and 2.0 mm.

Finally, the hose must be suitable for mounting, i.e. be able to be provided with coupling and threaded parts with the view to the subsequent assembly and mounting of the hose.

The production of the hose 1 can be effected either in an evenly advancing process or in separate process stages.

A flexible hose according to the invention will be able to fulfil any demands, which arise regarding durability both statistically and dynamically, also non-emission of the media and noise suppression. It will therefore be suitable for the transport of difficult media such as coolants of any kind, including gaseous media, and for the transport of sensitive, volatile foodstuffs or ingredients such as aromatics and fuel.

## Claims

1. Method of producing a hose which is built up in a number of layers, including a barrier layer of metal, said layers comprising an innermost layer in the form of an under-hose on which the metal layer (4), a plastic layer, an armouring layer and a cover layer of rubber are applied in the formation of the hose, **characterized in that** the surface of the under-hose (2) is modified by means of a plasma-corona treatment after which a layer of polymer (3) which can be vulcanised is applied, and after which the layer of metal (4) is applied, said metal layer (4) then being provided with a layer of polymer (5) which can be vulcanised, after which the layers are heated for vulcanising, followed by the application of the remaining layers (6,7,8).

2. Method according to claim 1, **characterized in that** the under-hose (2) consists of fluorine-plastic, and that the under-hose (2) and the outside of the metal layer (4) are provided with a layer which can be activated by heating, and which can consist of a dissolved silane connection.

3. Method according to claim 1 and 2, **characterized in that** the metal layer (4) is provided with corrugations before being applied.

4. Use of a hose with a number of layers comprising the sequence of layers:
- an innermost layer in the form of an under-hose (2) with a plasma/corona treated surface,
- a vulcanised metal layer (4) consisting of a layer of vulcanised polymer (3,5) on both sides of a metal layer,
- a plastic layer (6),
- an armouring layer (7) and
- a cover layer (8) of rubber,
where the hose (1) with the said layers (2-8) is used for the transport of media in refrigeration/air conditioning plants and fuel circuits, and for the transport of volatile media and/or media containing aromatics.

## Patentansprüche

1. Verfahren zur Herstellung eines mehrschichtigen Schlauches mit einer Barriereschicht aus Metall, wobei die Schichten eine innerste Schicht in Gestalt eines Unter-Schlauches enthalten, auf dem die Metallschicht (4), eine Kunststoffschicht, eine Armierschicht und eine Abdeckschicht aus Gummi in Ausbildung des Schlauches aufgebracht werden, **dadurch gekennzeichnet, dass** die Oberfläche des Unter-Schlauches (2) mit Hilfe einer Plasma-/Korona-Behandlung modifiziert wird, worauf eine Polymerschicht (3), die vulkanisiert werden kann, aufgebracht wird und worauf die Metallschicht (4) aufgebracht wird, wobei die Metallschicht (4) anschließend mit einer Polymerschicht (5) versehen wird, die vulkanisiert werden kann, worauf die Schichten zum Vulkanisieren erwärmt werden, gefolgt von der Aufbringung der restlichen Schichten (6, 7, 8).

2. Verfahren nach Anspruch 1, **dadurch gekennzeichnet, dass** der Unter-Schlauch (2) aus einem Fluorkunststoff besteht, und dass der Unter-Schlauch (2) sowie die Außenseite der Metallschicht (4) mit einer Schicht versehen werden, die durch Erwärmen aktiviert werden kann und die aus einer gelösten Silanverbindung bestehen kann.

3. Verfahren nach Anspruch 1 und 2, **dadurch gekennzeichnet, dass** die Metallschicht (4) mit Riffelungen versehen wird, bevor sie aufgebracht wird.

4. Verwendung eines mehrschichtigen Schlauches, der die Abfolge folgender Schichten enthält:
- eine innerste Schicht in Gestalt eines Unter-Schlauches (2) mit einer plasma-/korona-behandelten Oberfläche,
- eine vulkanisierte Metallschicht (4), die aus einer Schicht eines vulkanisierten Polymers (3, 5) auf beiden Seiten der Metallschicht besteht,
- eine Kunststoffschicht (6),
- eine Armierschicht (7) und
- eine Abdeckschicht (8) aus Gummi,
wobei der Schlauch (1) mit diesen Schichten (2-8) für den Transport von Medien in Kühl-/ oder Klimaanlagen und Brennstoffkreisläufen und für den Transport flüchtiger Medien und/oder Medien verwendet wird, die Aromate enthalten.

## Revendications

1. Procédé de production d'un conduit flexible formé de plusieurs couches, comprenant une couche barrière métallique, lesdites couches comprenant une couche située le plus à l'intérieur ayant la forme d'un sous-conduit sur lequel sont appliquées, lors de la formation du conduit flexible, la couche métallique (4), une couche en plastique, une couche de blindage et une couche de couverture en caoutchouc, **caractérisé en ce que** la surface du sous-conduit (2) est modifiée au moyen d'un traitement plasma/corona, suite à quoi une couche de polymère (3) vulcanisable est appliquée, et suite à quoi est appliquée la couche métallique (4), ladite couche métallique (4) étant ensuite munie d'une couche de polymère (5) vulcanisable, suite à quoi les couches sont chauffées en vue d'une vulcanisation suivie de l'application des couches restantes (6, 7, 8).

2. Procédé selon la revendication 1, **caractérisé en ce que** le sous-conduit (2) est fait de plastique fluoré, et **en ce que** le sous-conduit (2) et l'extérieur de la couche métallique (4) sont munis d'une couche qui peut être activée par chauffage, et qui peut consister en un agent adhésif au silane dissous.

3. Procédé selon les revendications 1 et 2, **caractérisé en ce que** la couche métallique (4) est munie de cannelures avant d'être appliquée.

4. Utilisation d'un conduit flexible formé de plusieurs couches, comprenant la séquence de couches suivante :
- une couche située le plus à l'intérieur ayant la forme d'une sous-couche (2) avec une surface traitée par plasma/corona,
- une couche métallique vulcanisée (4) consistant en une couche de polymère vulcanisé (3, 5) appliquée sur les deux côtés d'une couche métallique,
- une couche en plastique (6),
- une couche de blindage (7), et
- une couche de couverture (8) en caoutchouc,
dans laquelle le conduit flexible (1) comprenant lesdites couches (2 à 8) est utilisé pour acheminer un agent dans des installations de réfrigération/climatisation et dans des circuits de carburant, ainsi que pour l'acheminement d'agents volatils et/ou d'agents contenant des aromatiques.
